Europäisches Patentamt

European Patent Office

Office européen des brevets

(11) Numéro de publication : **0 425 355 B1**

(12) **FASCICULE DE BREVET EUROPEEN**

(45) Date de publication du fascicule du brevet :
**20.04.94 Bulletin 94/16**

(51) Int. Cl.⁵ : **G01S 3/784, F41G 7/30**

(21) Numéro de dépôt : **90402962.6**

(22) Date de dépôt : **22.10.90**

(54) **Système pour la localisation d'un mobile.**

(30) Priorité : **23.10.89 FR 8913841**

(43) Date de publication de la demande :
**02.05.91 Bulletin 91/18**

(45) Mention de la délivrance du brevet :
**20.04.94 Bulletin 94/16**

(84) Etats contractants désignés :
**BE DE DK ES GB IT NL SE**

(56) Documents cités :
**EP-A- 0 206 912**
**EP-A- 0 307 381**
**US-A- 3 761 180**
**US-A- 4 027 837**
**US-A- 4 197 424**

(73) Titulaire : **AEROSPATIALE SOCIETE NATIONALE INDUSTRIELLE Société Anonyme dite:**
**37, Boulevard de Montmorency**
**F-75016 Paris (FR)**

(72) Inventeur : **Grenier, Gilles**
**12 avenue des Tilleuls**
**F-78320 Le Mesnil Saint Denis (FR)**
Inventeur : **Guyot, Denis**
**12 rue St. Louis**
**F-78000 Versailles (FR)**

(74) Mandataire : **Bonnetat, Christian**
**CABINET BONNETAT 23, Rue de St.Pétersbourg**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un système pour la localisation d'un mobile. Quoique non exclusivement, elle est particulièrement appropriée à la localisation et au guidage de missiles, par exemple de missiles anti-char.

Par le brevet EP-A-0206912, on connaît déjà un système pour la localisation d'un mobile par rapport à un axe, comportant un détecteur optique disposé à poste fixe et coopérant avec un émetteur optique lié audit mobile, remarquable en ce que :

- ledit détecteur optique comporte, d'une part, une matrice fixe d'éléments photosensibles à transfert de charge (matrice CCD ou analogue), dont le plan est au moins sensiblement orthogonal audit axe et qui est associée à une optique apte à former sur ladite matrice une image de l'environnement dudit axe dans lequel ledit mobile est susceptible à se déplacer et, d'autre part, des moyens électroniques de commande desdits éléments photosensibles ;
- ledit émetteur optique engendre des éclats lumineux ; et
- des moyens de synchronisation sont prévus pour que lesdits moyens électroniques de commande délivrent des impulsions de commande synchronisées avec lesdits éclats lumineux et déclenchent une prise d'image.

Ainsi, grâce à un tel système, la position du mobile par rapport audit axe est donnée par la position du ou des éléments photosensibles de la matrice, excités par l'image des éclats lumineux, par rapport audit axe.

On remarquera que l'émetteur optique engendrant des éclats lumineux et lié au mobile peut être une balise lumineuse portée par celui-ci ou bien un simple miroir recevant des éclats lumineux d'une balise fixe et renvoyant lesdits éclats vers le détecteur optique.

Dans ce système connu, puisque le fonctionnement est impulsionnel et non pas continu, on peut obtenir un rapport signal/bruit particulièrement élevé. En effet, il est possible de réaliser des prises d'images qui ont une durée égale à celle des éclats de l'émetteur optique et qui sont synchronisées en fréquence et en phase avec l'émission lumineuse.

Ainsi, la synchronisation du détecteur et de l'émetteur permet de faire fonctionner ledit détecteur avec un niveau de signal utile voisin de la valeur de crête de la puissance de l'émetteur.

La liaison émetteur-détecteur peut donc fonctionner avec un rapport signal/bruit élevé, pour une puissance moyenne faible, ce qui permet de limiter la consommation et le coût de l'émetteur.

Comme cela est expliqué dans le brevet antérieur précité, la synchronisation entre le détecteur et l'émetteur peut être obtenue par des moyens de liaison permanente ou bien par des moyens de liaison temporaire, lesdits détecteur et émetteur comportant alors des moyens (bases de temps), pour maintenir individuellement ladite synchronisation.

Dans le premier cas (moyens de liaison permanente), la synchronisation peut être assurée par une liaison immatérielle ou par une liaison matérielle. Si la liaison est immatérielle, du type radioélectrique, elle est coûteuse, car il est nécessaire d'intégrer dans le mobile des équipements appropriés ; de plus, une telle liaison radioélectrique est sensible au brouillage et aux perturbations électromagnétiques, ce qui est un grave inconvénient, pouvant conduire à la perte du mobile par le détecteur optique. Si ladite liaison est matérielle, elle doit présenter une bande passante élevée afin de permettre une fréquence de synchronisation élevée. Une telle liaison matérielle ne peut donc être constituée que par une fibre optique, ce qui confère au système un coût élevé. De toute façon, une liaison matérielle limite obligatoirement le rayon d'action du mobile par rapport à l'émetteur optique.

Ainsi, il est souvent avantageux, et même parfois obligatoire, que la synchronisation soit obtenue grâce à des bases de temps synchronisées par une liaison temporaire, préalable au lancement du mobile, l'une desdites bases de temps étant associée au détecteur et l'autre à l'émetteur.

Toutefois, les erreurs de calcul initial de la période et les dérives relatives des deux bases de temps introduisent un glissement temporel des temps d'intégration de la matrice CCD par rapport aux éclats de l'émetteur. On est alors obligé d'allonger les temps d'intégration de la matrice CCD, de manière que chaque éclat soit toujours contenu dans l'intervalle temporel d'intégration correspondant, pendant la durée de vol du missile. Mais alors, le rapport signal/bruit est moins bon et le bilan peut à la limite n'être guère meilleur que dans le cas d'un émetteur continu.

La présenté invention a pour objet de remédier à ces inconvénients. Elle permet d'effectuer la poursuite temporelle du mobile, en boucle fermée, sans qu'aucune autre liaison que la liaison optique utilisée pour la localisation soit établie entre le mobile et le système de localisation. Grâce à l'invention, c'est la matrice CCD elle-même qui permet de reboucler en permanence la synchronisation émission-intégration.

A cette fin, selon l'invention, le système pour la localisation d'un mobile par rapport à un axe comportant :

- un émetteur optique lié audit mobile et engendrant des éclats lumineux, sous la dépendance d'une première base de temps ; et
- un détecteur photosensible disposé à poste fixe et associé à un système optique observant l'environnement dudit axe dans lequel ledit mobile est susceptible de se déplacer, ledit détecteur photosensible comportant un détecteur matriciel à transfert de charges et à transfert de trame commandé par des moyens électroniques associés à une seconde base de temps, et ledit détecteur matriciel comportant une zone photosensible sur laquelle ledit système optique est susceptible de former l'image quasi ponctuelle desdits éclats lumineux, la succession des temps d'intégration des images dans ladite zone photosensible et des temps de transfert desdites images hors de celle-ci étant sous la dépendance de ladite seconde base de temps ;

lesdites première et seconde bases de temps étant temporairement synchronisées avant le lancement dudit mobile de façon que chacun desdits éclats lumineux se produise pendant un temps d'intégration d'image de ladite zone photosensible, est remarquable en ce que, à des instants donnés, la durée d'un temps d'intégration de ladite zone photosensible est réduite à une valeur au plus égale à la durée desdits éclats lumineux, de façon que l'éclat lumineux correspondant se produise au moins en partie pendant le temps de transfert précédant ou suivant ledit temps d'intégration réduit, et en ce que lesdits moyens électroniques sont agencés, d'une part, pour calculer la dérive temporelle relative desdites première et seconde bases de temps à partir de la trace lumineuse formée par ledit éclat lumineux sur ladite zone photosensible et, d'autre part, pour recaler ladite seconde base de temps par rapport à la première en fonction de cette dérive calculée.

Comme on peut le voir, la présente invention met à profit la propriété des zones d'intégration d'images des détecteurs matriciels CCD à transfert de lignes d'être sensibles à une image pendant les temps de transfert.

De préférence, la réduction de durée d'un temps d'intégration de ladite zone photosensible, le calcul de ladite dérive temporelle relative desdites première et seconde bases de temps et le recalage de ladite seconde base temps par rapport à la première sont périodiques.

Ces diverses opérations ont lieu alors systématiquement tous les $n$ temps d'intégration, le nombre $n$ pouvant par exemple être égal à 10.

Avantageusement, lesdits moyens électroniques calculent ladite dérive temporelle relative $\Delta t$ entre lesdites première et seconde bases de temps à partir de l'expression :

$$\Delta t = m / F,$$

dans laquelle $m$ est le nombre des lignes de ladite zone photosensible sur lesquelles s'étend ladite trace lumineuse et $F$ est la fréquence de transfert des lignes dans ledit détecteur matriciel.

Puisque, grâce à l'invention, on obtient en permanence le calage des temps d'intégration du détecteur matriciel par rapport aux éclats lumineux, il est possible :

- de réduire les exigences sur la synchronisation préalable ;
- de réduire la marge temporelle de sécurité prise sur l'intégration, ce qui améliore le bilan de liaison ; et
- d'accepter des dérives relatives des bases de temps de l'émetteur et du détecteur.

La plus grande précision temporelle est acquise pour des sources lumineuses ponctuelles, dont la durée d'émission est du même ordre que celle des transferts de ligne. Eventuellement, il est possible de réduire volontairement la durée de l'émission lumineuse pour la mesure particulière toutes les $n$ trames. Le bilan de liaison est identique compte tenu du non étalement de la trace du fait des transferts dans ce cas.

Dans un mode avantageux de réalisation du système conforme à la présente invention, les temps desdits éclats lumineux sont compris entre 5 et 10 µs, les temps d'intégration de la zone photosensible sont, sauf lorsqu'ils sont réduits en-dessous des temps desdits éclats lumineux, compris entre 10 et 20 µs, et les temps de transfert correspondant aux temps d'intégration non réduits sont de l'ordre de 10 µs.

Les figures du dessin annexé feront bien comprendre comment l'invention peut être réalisée. Sur ces figures, des références identiques désignent des éléments identiques.

La figure 1 est une vue schématique illustrant le système de localisation selon l'invention.

La figure 2 est le schéma synoptique du détecteur matriciel à transfert de charges et à transfert de trame utilisé dans le système de la figure 1.

La figure 3 donne le schéma synoptique du système de la figure 1.

Les figures 4a à 4d sont des diagrammes temporels illustrant le fonctionnement synchronisé du système de la figure 1.

Les figures 5a à 5c montrent schématiquement la formation de l'image ponctuelle d'un éclat sur le détecteur matriciel.

Les figures 6a à 6d et les figures 7a à 7d sont des schémas temporels illustrant le fonctionnement réel du système selon l'invention, respectivement dans deux configurations différentes.

Les figures 8 et 9 illustrent l'état de la zone photosensible du détecteur matriciel, respectivement dans les configurations des figures 6a à 6d et 7a à 7d.

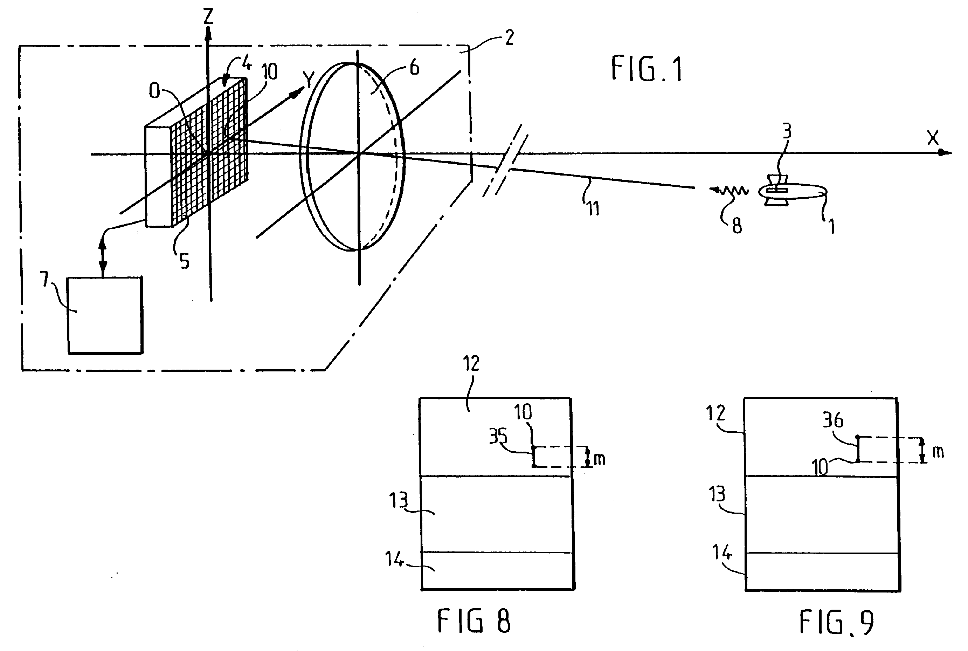

Le mode de réalisation du système de localisation, conforme à l'invention et montré par la figure 1, est destiné à permettre de connaître en continu la position d'un missile 1, par rapport à un axe OX qui, par exemple, représente la ligne de visée d'un système d'arme anti-char (non représenté), équipé dudit dispositif de localisation.

Le système de localisation est essentiellement constitué d'un détecteur optique 2 arrangé à poste fixe, par exemple dans ledit système d'arme, et d'une balise lumineuse impulsionnelle 3 portée par ledit missile. On remarquera que la balise 3 pourrait être disposée à poste fixe, par exemple dans le détecteur 2, le missile 1 portant alors un miroir qui réfléchirait vers le détecteur 2 les éclats qui lui seraient adressés par ladite balise fixe. L'émetteur lié audit missile serait alors formé par ledit miroir.

Le détecteur fixe 2 comporte essentiellement un détecteur matriciel 4 d'éléments photosensibles 5, du type CCD à transfert de charges et à transfert de trame, un système optique 6 et des circuits électroniques 7 pour la mise en oeuvre du détecteur matriciel 4.

Dans le détecteur matriciel 4, les éléments photosensibles 5 sont disposés en un agencement coplanaire de lignes et de colonnes, respectivement parallèles à un axe OY et à un axe OZ. Le point O est par exemple le centre du détecteur matriciel 4 et les axes OX, OY et OZ forment un système d'axes rectangulaires dont l'axe OX est orthogonal au plan du détecteur matriciel 4, alors que les axes OY et OZ sont coplanaires audit détecteur matriciel.

Le système optique 6 est susceptible de former sur le détecteur matriciel 4 l'image de l'espace entourant l'axe OX, et notamment l'image ponctuelle des éclats lumineux 8 émis par la balise 3.

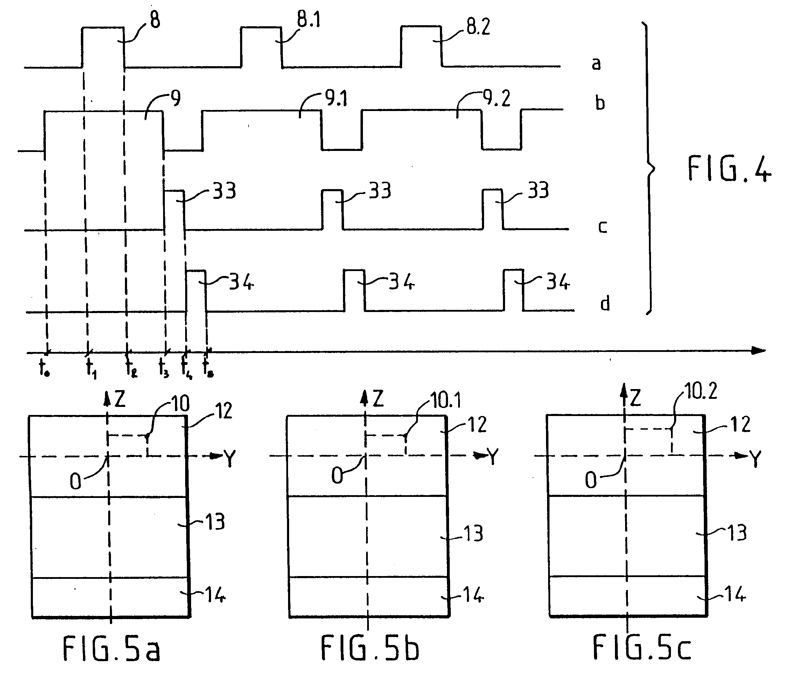

Comme on le verra en détail ci-après, les circuits électroniques 7 permettent de lire les charges engendrées par les éléments photosensibles du détecteur matriciel pendant des temps d'intégration 9 (voir la figure 4), c'est-à-dire de réaliser des prises d'images successives de l'espace environnant l'axe OX. La durée d'exposition du détecteur matriciel 4, c'est-à-dire la durée desdits temps d'intégration 9 et desdites prises d'images, est courte et correspond au temps d'intégration des photons sur les zones sensibles des éléments photosensibles 5. Selon l'invention, elle peut être de l'ordre de 10 à 20 microsecondes.

La balise lumineuse 3 comporte une source impulsionnelle susceptible d'émettre les éclats lumineux 8 de lumière visible ou infrarouge. Par exemple, cette source est une lampe au xénon pourvue d'une optique de concentration, ou bien encore un générateur ou une diode laser avec ou sans optique.

Les éclats 8 ont une courte durée, par exemple de l'ordre de 10 microsecondes.

De préférence, ladite source impulsionnelle est équipée d'un filtre de faible largeur spectrale, limitant le rayonnement de la balise 3. De même, un filtre identique est alors associé à l'optique 6 du détecteur 2, de façon à éliminer le rayonnement extérieur à la bande d'émission de la balise 3 et à permettre des séparations spectrales éventuellement souhaitables.

Grâce à une liaison initiale temporaire de synchronisation, rompue avant le lancement du missile 1, l'émission des éclats 8 par la balise 3 est synchronisée avec les prises d'image effectuées par le détecteur matriciel 4, déclenché par les circuits 7. Ceci est illustré par les figures 4a à 4d qui montrent que les temps d'intégration 9 sont synchronisés avec les éclats 8. La durée de chaque temps d'intégration 9 est au moins égale à celle des éclats 8 de façon que chaque éclat soit entièrement recouvert temporellement par un temps d'intégration 9.

La liaison de synchronisation étant temporaire, le détecteur 2 et la balise 3 comportent des horloges (bases de temps) stables susceptibles de maintenir la synchronisation des temps d'intégration 9 de prises d'images et des éclats 8, pendant tout le vol dudit missile.

Ainsi, à chaque fois qu'un éclat 8 est émis par la balise 3, le détecteur 2 est actif, de sorte que l'image ponctuelle 10 de cet éclat, faite par le système optique 6, frappe un élément 5 du détecteur matriciel 4. Cet élément 5 excité constitue donc l'image de l'éclat 8 vue par le détecteur 2. Puisque l'éclat 8 est lié au missile 1, les coordonnées de l'élément 5 excité par rapport aux axes OY et OZ sont caractéristiques de la position dudit missile 1 par rapport à l'axe OX.

A partir des coordonnées dudit élément 5 excité, les circuits 7 peuvent élaborer un signal représentatif de ladite position, éventuellement destiné à corriger la trajectoire dudit missile.

Le fonctionnement théorique qui vient d'être décrit suppose que la synchronisation entre la balise 3 et le détecteur optique 2 reste parfaite tout au long du trajet de missile 1. Or, à cause des erreurs de synchronisation dues à la liaison temporaire de synchronisation initiale, d'une part, et à la dérive des bases de temps prévues sur la balise et le détecteur, d'autre part, un tel maintien de la synchronisation est illusoire, de sorte qu'il est nécessaire de recaler de temps en temps le détecteur par rapport à la balise, ou vice-versa. C'est là précisément l'objet de la présente invention.

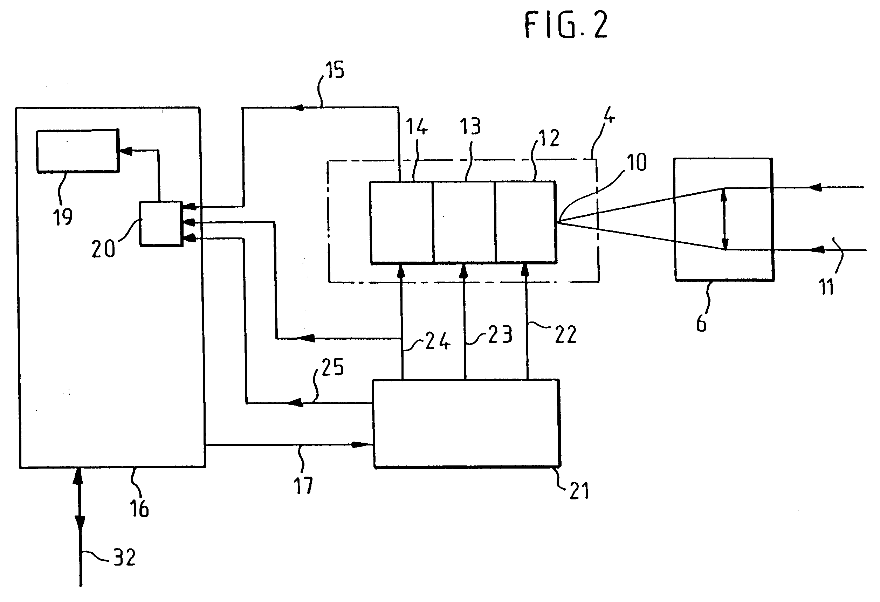

Toutefois, avant d'expliquer en détail le procédé conforme à l'invention, il apparaît utile de décrire plus précisément le détecteur matriciel CCD 5 et son mode de fonctionnement, en regard de la figure 2.

Sur cette figure 2, on peut voir que le détecteur matriciel 4 à transfert de charges et à transfert de trame comporte :

- une zone photosensible 12, qui reçoit le faisceau lumineux impulsionnel 11 (éclats 8) en provenance de la balise 3 et qui est constituée d'une pluralité de lignes d'éléments photosensibles 5 et sur la totalité desquelles ledit système optique 6 est susceptible de former une image ; cette zone photosensible 12 est apte à intégrer les charges électriques engendrées par les photons de ladite image pour engendrer des informations d'image sous forme électrique ;

- une zone de mémoire intermédiaire 13, qui est constituée d'une pluralité de lignes d'éléments de mémoire et dans laquelle sont transférées ligne à ligne lesdites informations électriques d'image contenues dans les lignes de ladite zone photosensible 12 ; et

- un registre de lecture 14, dans lequel les informations électriques d'image correspondant à chaque ligne de la zone de mémoire intermédiaire 13 sont transférées en parallèle, ledit registre de lecture 14 engendrant, à sa sortie 15, un signal vidéo représentatif de l'image reçue du système optique 6 par la zone photosensible 12.

Le détecteur matriciel 4 est par ailleurs associé :

- à une unité de traitement 16, extérieure audit détecteur matriciel 4 et engendrant, à sa sortie 17, les paramètres définissant l'acquisition des images, tels que durée d'exposition des images, synchronisation des prises des images, synchronisation de la lecture, etc ... ;
- à au moins une mémoire 19 dont l'accès est commandé par un dispositif de commande 20 ; la mémoire 19 et le dispositif 20 sont extérieurs au détecteur matriciel 4 et sont avantageusement incorporés à l'unité de traitement 16 ; et
- à un séquenceur 21 recevant de la sortie 17 de l'unité de traitement 16 lesdits paramètres d'acquisition des images et chargé de commander la prise d'image par la zone photosensible 12 et de régir les transferts d'informations.

A cet effet, le séquenceur 21 comporte notamment :

- une sortie 22 sur laquelle apparaît un signal adressé à la zone photosensible 12 et destiné à faire progresser ligne par ligne les informations électriques d'image a l'intérieur de ladite zone photosensible 12 en direction de la zone de mémoire intermédiaire 13 ;
- une sortie 23 sur laquelle apparaît un signal adressé à la zone de mémoire intermédiaire 13 et destiné à faire progresser ligne par ligne les informations électriques d'image à l'intérieur de ladite zone de mémoire intermédiaire 13 en direction dudit registre de lecture 14 ;
- une sortie 24 sur laquelle apparaît un signal adressé au registre de lecture 14 et destinée à commander celui-ci pour qu'il adresse à la mémoire 19, par l'intermédiaire de sa sortie 15 et du dispositif de commande 20, un signal vidéo série à partir des informations parallèles qu'il reçoit de la zone de mémoire intermédiaire 13. Par ailleurs, la sortie 24 est également reliée audit dispositif de commande 20 de ladite mémoire 19 ; et
- une sortie 25 sur laquelle apparaît un signal de validation adressé audit dispositif de commande 20.

Chacun des signaux apparaissant aux sorties 22, 23 et 24 du séquenceur 21 est constitué d'une suite d'impulsions de fréquence constante, chaque impulsion correspondant à un passage d'une ligne à la suivante (pour les zones 12 et 13) ou à la transformation d'une ligne parallèle en une ligne série (pour le registre de lecture 14).

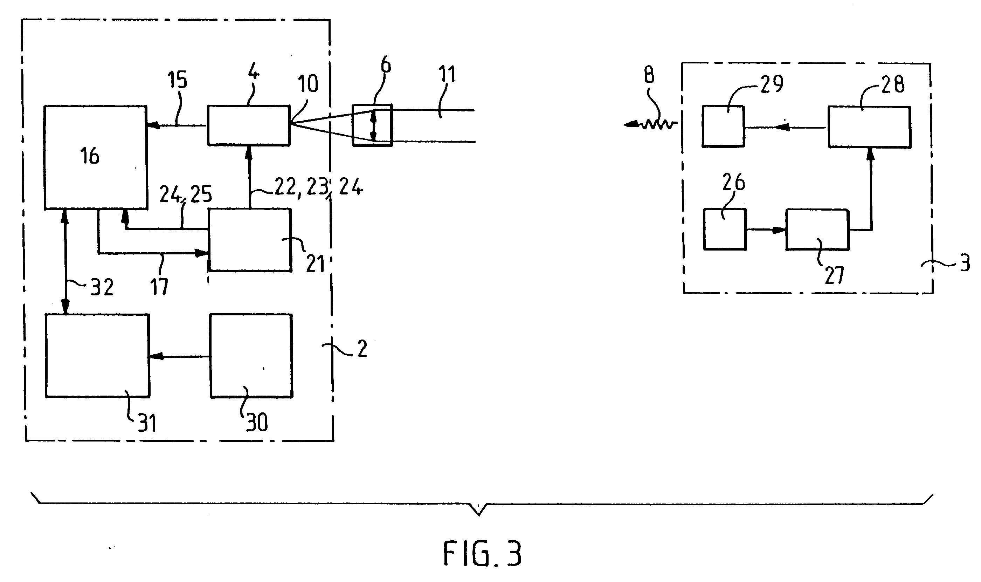

Sur la figure 3, on a représenté schématiquement un mode de réalisation du système selon l'invention en tenant compte du schéma de la figure 2. On peut y voir que l'émetteur optique 3 comporte une base de temps 26 alimentant un séquenceur 27, commandant un dispositif électronique de déclenchement 28, qui, lui-même commande la source lumineuse 29 émettant les éclats 8.

Les circuits électroniques de commande du détecteur optique 2 comportent une base de temps 30 reliée à un processeur 31, activant l'unité de traitement 16 d'acquisition d'images par la commande 32. Conformément au schéma de la figure 2, le séquenceur 27 est relié au détecteur matriciel 4 par les liaisons 22, 23 et 24 et à l'unité de traitement 16 par les liaisons 17, 24 et 25. De plus, on a représenté la liaison 15 entre le détecteur matriciel 4 et l'unité de traitement 16. On voit que les dispositifs 16, 21, 30 et 31 forment les circuits électroniques 7 de la figure 1.

Le fonctionnement théorique du système des figures 1 et 3 est expliqué ci-après, à l'aide de la figure 2, des diagrammes des figures 4a à 4d et des schémas des figures 5a à 5c.

A un instant initial to, on suppose que la zone photosensible 12 est entièrement vidée des informations qu'elle contenait antérieurement. Le séquenceur 21 n'émet aucun signal sur sa sortie 22, de sorte que commence un temps d'intégration 9 (voir la figure 4b). Aussi, lorsqu' à l'instant t1, postérieur à to, apparaît un éclat lumineux 8 (voir la figure 4a), l'image de cet éclat est intégrée dans la zone photosensible 12, jusqu'à l'instant t2 auquel se termine ledit éclat lumineux. A l'instant t3, postérieur à t2, le temps d'intégration 9 est terminé.

Ainsi, dans la zone photosensible 12, l'image ponctuelle 10 de l'éclat lumineux 8, représentative de la position du missile 1 par rapport à l'axe OX, se forme sur un élément photosensible particulier 5 de cette zone photosensible 12. On remarquera que la position de l'image ponctuelle 10 dans la zone photosensible 12 (voir la figure. 5a) ne dépend que de la position du missile 1 par rapport à l'axe OX ; elle est notamment indépendante de la relation temporelle entre l'éclat lumineux 8 et le temps d'intégration 9. La position de l'éclat lumineux 8 à l'intérieur du temps d'intégration 9 n'a aucune influence sur la position de l'image 10 sur la zone photosensible 12.

A l'instant t3 correspondant à la fin du temps d'intégration 9, le séquenceur 21 émet un signal sur ses sorties 22 et 23, sans émettre sur sa sortie 24. Par suite, l'image 10 de l'éclat 8 est avancée ligne par ligne en direction de la zone de mémoire intermédiaire 13. Le transfert des lignes de la zone photosensible 12 dans la zone de mémoire intermédiaire 13 s'effectue pendant l'impulsion temporelle 33 et est terminée à l'instant t4, postérieur à t3. A cet instant t4, le séquenceur 21 émet un signal sur ses sorties 23 et 24, sans émettre sur sa sortie 22, de sorte que le contenu de la mémoire intermédiaire 13 est lu par le registre de lecture 14. Une telle lecture s'étend jusqu'à l'instant t5, postérieur à t4 (voir l'impulsion temporelle 34 de la figure 4d). Pendant l'impulsion 34, le contenu de la mémoire intermédiaire 13 est avancé, ligne par ligne, vers le registre 14, puis transféré dans celui-ci, qui l'adresse, par sa sortie 15, dans la mémoire 19. Grâce à la liaison entre la sortie 24 du séquenceur 21 et le dispositif de commande 20, le signal vidéo à ladite sortie 15 du registre de lecture 14 est échelonné et synchronisé par le signal de lecture apparaissant à la sortie 24.

On remarquera que les transferts ligne à ligne du contenu de la zone photosensible 12 dans la zone de mémoire intermédiaire 13, puis du contenu de cette zone de mémoire intermédiaire dans le registre de lecture 14, puis la sérialisation dudit contenu par le registre 14, permettent sans difficulté de connaître la position de l'image 10 par rapport aux axes OY et OZ, c'est-à-dire la position du missile 1 par rapport à l'axe OX.

A l'instant t5, on se retrouve dans la situation de l'instant to et un nouveau cycle peut recommencer avec un nouveau temps d'intégration 9.1 et un nouvel éclat lumineux 8.1

Dans la zone photosensible 12, apparaît alors l'image 10.1 de l'éclat 8.1 suivant (voir la figure 5b). On remarquera qu'étant donné la fréquence élevée des impulsions 9 et des éclats 8, la position de l'image 10.1 n'est guère différente de celle de l'image 10.

Grâce à une suite d'impulsions 8, 8.1, 8.2, ..., 9, 9.1, 9.2, ..., 33, 34, ..., il est possible de suivre, pratiquement en continu, la position 10, 10.1, 10.2 (figure 5c) du missile 1 par rapport à l'axe OX.

On remarquera que le fonctionnement théorique précédemment décrit suppose que le synchronisme de la suite des temps d'intégration 9, 9.1, 9.2, ... et des éclats 8, 8.1, 8.2, ... soit, sinon parfait, du moins suffisamment bon pour que lesdits éclats se produisent pendant lesdits temps d'intégration.

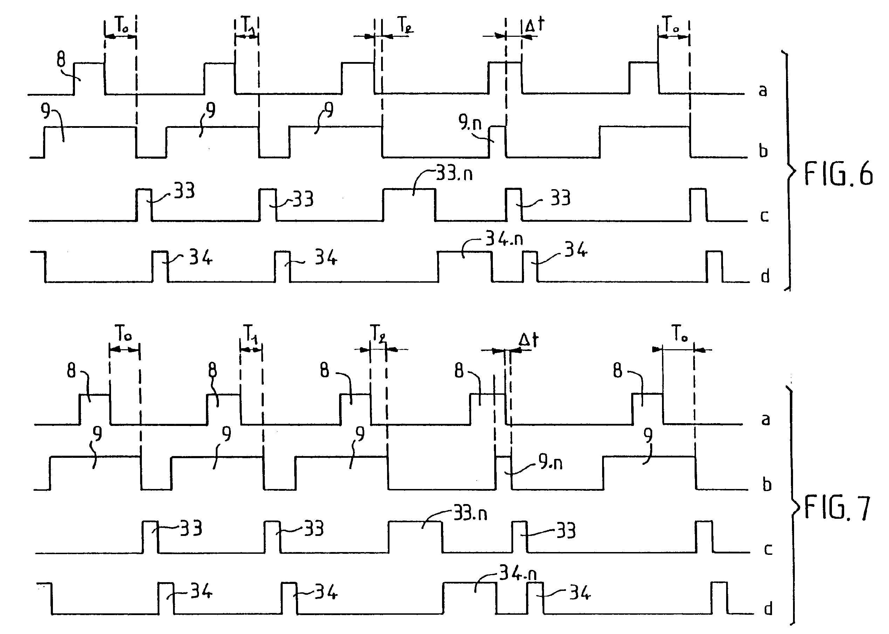

Or, la dérive relative des bases de temps 26 et 30, ainsi que les erreurs commises au moment de la synchronisation temporaire de celles-ci, rendent illusoire un tel fonctionnement. En réalité, le calage initial To entre les impulsions 8 et 9 (voir les figures 6a et 7a) varie (T1, T2, ...) au point que les éclats 8 arriveraient à se produire à l'extérieur des temps d'intégration 9.

Aussi, selon l'invention, on prévoit que de temps à autre, par exemple périodiquement, tous les $n$ temps d'intégration 9 (par exemple $n = 10$), la durée tot3 d'un temps d'intégration 9 soit réduite à une valeur (par exemple égale à 1 μs) au plus égale à la durée t1t2 des éclats 8. Sur les figures 6 et 7, on a représenté un temps d'intégration 9.n, correspondant à une telle durée d'intégration réduite. Dans les deux exemples représentés, on a supposé que la durée de chaque temps d'intégration réduit 9.n était inférieure à celle des éclats 8.

Bien entendu, une telle réduction, de préférence périodique, de la durée des temps d'intégration 9, entraîne corrélativement un allongement des impulsions de transfert 33 et 34 (voir les impulsions de transfert 33.n et 34.n des figures 6 et 7).

La réduction de la durée des temps d'intégration 9.n et l'allongement corrélatif de la durée des impulsions 33.n et 34.n sont gérés par le processeur 31, qui adresse ses ordres à l'unité 16, elle-même commandant en conséquence le séquenceur 21 par la liaison 17.

Du fait de la réduction de durée du temps d'intégration 9.n, l'éclat lumineux 8 correspondant s'étend partiellement, soit sur la durée des impulsions de transfert 33 et 34 suivant immédiatement le temps d'intégration 9.n (cas de la figure 6), soit sur les impulsions de transfert allongées 33.n et/ou 34.n précédant ledit temps d'intégration. 9.n (cas de la figure 7).

Ainsi, ledit éclat lumineux frappe en partie la zone photosensible 12, pendant le transfert du contenu de celle-ci, dans la zone de mémoire intermédiaire 13 et/ou dans le registre 14. Il en résulte, dans le premier cas, une trace lumineuse 35 qui s'étend sur plusieurs lignes d'image depuis l'image 10 formée par la partie de l'éclat 8 en correspondance temporelle avec le temps d'intégration réduit 9.n (voir la figure 8) et, dans le second cas, une trace lumineuse 36 qui s'étend sur plusieurs lignes d'image jusqu'à ladite image 10 (voir la figure 9).

Si $m$ est le nombre de lignes d'image sur lesquelles s'étendent les traces 35 ou 36, on voit que :

$$m = F \times \Delta t,$$

expression dans laquelle F (par exemple égale à 2 MHz) est la fréquence de transfert des lignes d'images et Δt le décalage entre le temps d'intégration réduit 9.n et l'éclat 8 correspondant.

Bien entendu, le processeur 31 connaît la fréquence F ; de plus, il connaît le nombre de lignes $m$ par l'unité de commande 16. Il peut donc facilement calculer Δt.

Le processeur 31 calcule donc aisément le décalage $T \pm \Delta t$ (le signe + correspondant au cas de la figure 6, et le signe - à celui de la figure 7), que la dérive relative des bases de temps 26 et 30 a introduit entre les temps d'intégration 9 et les éclats lumineux 8.

Il peut donc commander l'unité de commande 16 et le séquenceur 21 pour recaler lesdits temps d'intégration 9 par rapport aux éclats lumineux 8, de façon que le temps d'intégration 9 suivant le temps d'intégration réduit 9.n présente, par rapport à l'éclat lumineux 8 correspondant, un calage temporel égal au calage initial To.

Ainsi, on obtient un recalage continu des temps d'intégration 9 par rapport aux éclats 8.

Bien entendu, la synchronisation préalable balise 3-détecteur 2 est assurée au départ du missile 1 avec une précision suffisante (par exemple 0,5 μs) pour maintenir pendant quelques images successives (prises par exemple au rythme de 50 Hz environ), l'émission lumineuse des éclats 8 (par exemple 5 à 10 μs) dans des temps d'intégration 9 courts (par exemple 20 μs), synchronisés en phase et en fréquence avec l'émission desdits éclats.

**Revendications**

1. Système pour la localisation d'un mobile (1) par rapport à un axe (OX) comportant :
   - un émetteur optique (3) lié audit mobile et engendrant des éclats lumineux (8), sous la dépendance d'une première base de temps (26) ; et
   - un détecteur photosensible (2) disposé à poste fixe et associé à un système optique (6) observant l'environnement dudit axe (OX) dans lequel ledit mobile (1) est susceptible de se déplacer, ledit détecteur photosensible (2) comportant un détecteur matriciel (4) à transfert de charges et à transfert de trame commandé par des moyens électroniques (16, 21, 31) associés à une seconde base de temps (30), et ledit détecteur matriciel (4) comportant une zone photosensible (12) sur laquelle ledit système optique est susceptible de former l'image desdits éclats lumineux (8), la succession des temps d'intégration des images dans ladite zone photosensible (12) et des temps de transfert desdites images hors de celle-ci étant sous la dépendance de ladite seconde base de temps ;
   lesdites première et seconde bases de temps (26 et 30) étant temporairement synchronisées avant le lancement dudit mobile de façon que chacun desdits éclats lumineux (8) se produise pendant un temps d'intégration (9) d'image de ladite zone photosensible (12),
   caractérisé en ce que, à des instants donnés, la durée d'un temps d'intégration de ladite zone photosensible (12) est réduite à une valeur au plus égale à la durée desdits éclats lumineux (8), de façon que l'éclat lumineux correspondant se produise au moins en partie pendant le temps de transfert précédant ou suivant ledit temps d'intégration réduit, et en ce que lesdits moyens électroniques sont agencés, d'une part, pour calculer la dérive temporelle relative desdites première et seconde bases de temps à partir de la trace lumineuse (35, 36) formée par ledit éclat lumineux sur ladite zone photosensible (12) et, d'autre part, pour recaler ladite seconde base de temps par rapport à la première en fonction de cette dérive calculée.

2. Système selon la revendication 1, caractérisé en ce que la réduction de durée d'un temps d'intégration de ladite zone photosensible, le calcul de ladite dérive temporelle relative desdites première et seconde bases de temps et le recalage de ladite seconde base de temps par rapport à la première sont périodiques.

3. Système selon l'une des revendications 1 ou 2, caractérisé en ce que lesdits moyens électroniques sont agencés pour calculer ladite dérive temporelle relative ( Δt) entre lesdites première et seconde bases de temps à partir de l'expression Δt = m / F,
   dans laquelle $\underline{m}$ est le nombre des lignes de ladite zone photosensible (12) sur lesquelles s'étend ladite trace lumineuse (35, 36) et $\underline{F}$ est la fréquence de transfert des lignes dans ledit détecteur matriciel.

4. Système selon l'une quelconque des revendications 1 à 3, caractérisé en ce que les temps desdits éclats lumineux (8) sont compris entre 5 et 10 μs, en ce que les temps d'intégration de la zone photosensible (12) sont, sauf lorsqu'ils sont réduits en-dessous des temps desdits éclats lumineux, compris entre 10 et 20 μs, et en ce que les temps de transfert correspondant aux temps d'intégration non réduits sont de l'ordre de 10 μs.

**Patentansprüche**

1. System für die Bahnverfolgung eines bewegten Körpers (1) im Verhältnis zu einer Achse (OX) mit:
   - einem optischen Sender (3), der mit dem genannten bewegten Körper verbunden ist und in Abhängigkeit von einer ersten Zeitbasis (26) Blinksignale (8) aussendet; und
   - einem ortsfesten lichtempfindlichen Sensor (2), der an ein optisches System (6) angeschlossen ist, das die Umgebung der genannten Achse (OX) observiert, auf der sich der genannte bewegte Körper (1) bewegen wird, wobei der genannte lichtempfindliche Sensor (2) einen Matrixsensor (4) mit Ladungsübertragung und Rasterübertragung besitzt, der anhand elektronischer Einrichtungen (16, 21, 31) gesteuert wird, denen eine zweite Zeitbasis (30) zugeordnet ist, und der genannte Matrixsensor (4) eine lichtempfindliche Zone (12) besitzt, auf der das genannte optische System das Bild der genannten Blinksignale (8) abbilden kann, wobei die aufeinanderfolgenden Integrationszeiten für die Bilder in der genannten lichtempfindlichen Zone (12) und der Transferzeiten der genannte Bilder aus dieser lichtempfindlichen Zone heraus von der genannten zweiten Zeitbasis abhängig sind ;

wobei die genannte erste und zweite Zeitbasis (26 und 30) zeitweilig, vor dem Abschuß des genannten bewegten Körpers so synchronisiert werden, daß sich jedes der genannten Blinksignale während einer Integrationszeit (9) des Bildes in der genannten lichtempfindlichen Zone (12) ereignet ,

dadurch gekennzeichnet, daß die Dauer einer Integrationszeit in die genannte lichtempfindliche Zone (12) zu bestimmten Zeitpunkten auf einen Wert reduziert wird, der höchstens der Dauer der genannten Blinksignale (8) entspricht, so daß sich das Blinksignal zumindest teilweise während der Übertragungszeit ereignet, die der genannten reduzierten Integrationszeit vorangeht oder ihr folgt, und, daß die genannten elektronischen Einrichtungen einerseits für die Berechnung der relativen Zeitverschiebung, der ersten und zweiten Zeitbasis anhand der Lichtspur (35, 36) eingerichtet sind, die durch das genannten Blinksignal auf der genannten lichtempfindlichen Zone (12) gebildet wird und andererseits, für die Justierung der genannten zweiten Zeitbasis im Verhältnis zur ersten anhand der berechneten Zeitverschiebung.

2. System gemäß Anspruch 1, dadurch gekennzeichnet, daß die Reduzierung der Dauer der Integrationszeit in die genannte lichtempfindliche Zone, die Berechnung der genannten relativen Zeitverschiebung der genannten ersten und zweiten Zeitbasis und die Justierung der genannten zweiten Zeitbasis im Verhältnis zur ersten regelmäßig erfolgen.

3. System gemäß einem der Ansprüche 1 oder 2, dadurch gekennzeichnet, daß die genannten elektronischen Einrichtungen dafür eingerichtet sind, um die genannte relative Zeitverschiebung ($\Delta$ t) zwischen der genannten ersten und zweiten Zeitbasis anhand des Ausdrucks $\Delta t = m / F$ zu berechnen, bei dem $\underline{m}$ die Anzahl der Zeilen der genannten lichtempfindlichen Zone (12) angibt, über die sich die genannte Lichtspur (35, 36) erstreckt und $\underline{F}$ die Frequenz des Transfers der Zeilen in den genannten Matrixsensor.

4. System gemäß einem der Ansprüche 1 bis 3, dadurch gekennzeichnet, daß die Dauer der genannten Blinksignale (8) zwischen 5 und 10 $\mu$s beträgt, daß die Integrationszeiten der lichtempfindlichen Zone (12) - sofern sie nicht unter die Zeiten für die genannten Blinksignale gesenkt werden - zwischen 10 und 20 $\mu$s betragen und daß die Transferzeiten, die den nicht reduzierten Integrationszeiten entsprechen, bei 10 $\mu$s liegen.

## Claims

1. System for localizing a moving object (1) with respect to an axis (OX) including:
   - an optical emitter (3) linked to the said moving object and generating flashes of light (8) under the control of a first time base (26); and
   - a photosensitive detector (2) arranged at a fixed point and associated with an optical system (6) observing the environment of the said axis (OX) in which the said moving object (1) is capable of moving, the said photosensitive detector (2) including a charge-transfer and frame-transfer matrix detector (4) controlled by electronic means (16, 21, 31) associated with a second time base (30), and the said matrix detector (4) including a photosensitive area (12) on which the said optical system is capable of forming the image of the said flashes of light (8), the succession of the integration times of the images in the said photosensitive area (12) and the transfer times of the said images out of the latter being under the control of the said second time base;

   the said first and second time bases (26 and 30) being temporarily synchronized before the launch of the said moving object in such a way that each of the said flashes of light (8) is produced during an image integration time (9) of the said photosensitive area (12), characterized in that, at a given instance, the duration of one integration time of the said photosensitive area (12) is reduced to a value which is at most equal to the duration of the said flashes of light (8), so that the corresponding flash of light is produced at least partly during the transfer time preceding or following the said reduced integration time, and in that the said electronic means are arranged, on the one hand, to calculate the relative time drift of the said first and second time bases from the light trace (35, 36) formed by the said flash of light on the said photosensitive area (12) and, on the other hand, to reset the said second time base with respect to the first, on the basis of this calculated drift.

2. System according to Claim 1, characterized in that the reduction in duration of an integration time of the said photosensitive area, the calculation of the said relative time drift of the said first and second time bases and the resetting of the said second time base with respect to the first are periodic.

3. System according to one of Claims 1 or 2, characterized in that the said electronic means are arranged to calculate the said relative time drift ($\Delta t$) between the said first and second time bases from the expression $\Delta t = m/F$, in which $\underline{m}$ is the number of the lines of the said photosensitive area (12) over which the said light trace (35, 36) extends, and $\underline{F}$ is the frequency of transfer of the lines in the said matrix detector.

4. System according to any one of Claims 1 to 3, characterized in that the times of the said flashes of light (8) lie between 5 and 10 $\mu$s, in that the integration times of the photosensitive area (12) lie, except when they are reduced below the times of the said flashes of light, between 10 and 20 $\mu$s, and in that the transfer times corresponding to the non-reduced integration times are of the order of 10 $\mu$s.

FIG.1

FIG 8

FIG.9

EP 0 425 355 B1

FIG. 2

FIG. 3

FIG.4

FIG.5a    FIG.5b    FIG.5c

EP 0 425 355 B1

FIG.6

FIG.7

EP 0 425 355 B1